# EUROPEAN PATENT SPECIFICATION

(11) **EP 0 487 158 B1**
(45) Date of publication and mention of the grant of the patent: **08.03.1995**
(21) Application number: 91202993.1
(22) Date of filing: 18.11.1991
(51) Int. Cl.: C10J 3/46, C10J 3/08, C10J 3/00, B01D 53/96

(54) **Spent catalyst disposal**
Entsorgung von gebrauchtem Katalysator
Elimination de catalyseur usé

(30) Priority: 19.11.1990 US 615194
(43) Date of publication of application: 27.05.1992
(73) Proprietor: SHELL INTERNATIONALE RESEARCH MAATSCHAPPIJ B.V., 2596 HR Den Haag (NL)
(72) Inventor: Bush, Warren Van Ness, Houston, Texas 77043 (US)

(56) References cited:
- EP-A- 0 278 063
- EP-A- 0 291 754
- EP-A- 0 305 047
- GB-A- 2 159 132
- US-A- 4 810 475
- PATENT ABSTRACTS OF JAPAN vol. 13, no. 501 (C-652)(3849) 10 November 1989
- PATENT ABSTRACTS OF JAPAN vol. 10, no. 226 (C-364)(2282) 7 August 1986

## Description

The present invention relates to a process for the treatment of spent catalyst from various segments of an integrated process for the gasification of coal.

A wide variety of chemical processes employs catalysts to increase the rate of reaction, so much so that catalyst manufacture is a significant commercial activity itself. Because even so-called "regenerable" catalysts eventually become degraded either physically, e.g. chipped, broken, etc., or chemically, e.g. "sulphided", "oxidized", or "carbonized", efficient operations require that the catalyst be replaced when the catalyst no longer performs as desired. However, if the "spent" catalyst can no longer be used in other operations, it must be disposed of, advantageously in a useful manner. Unfortunately, such materials, because of their nature, particularly that of "actives" contained therein, often present a disposal problem, and, in some instances, the spent catalysts are even classified as a hazardous waste. Occasionally, spent catalysts are sent to toll reclaimers for the recovery of active metals, but in many catalysts the amount of active material which is recoverable is too small to justify reclaiming on an economic basis.

The partial combustion or gasification of coal to produce synthesis gas is an integrated procedure which, in order to derive an acceptable product or fuel gas, employs a number of catalytic purification procedures. For example, the synthesis gas also contains sulphur-containing gases, such as hydrogen sulphide and carbonyl sulphide, as well as small amounts of ammonia and hydrogen cyanide. The presence of HCN, NH₃ and COS in synthesis gas derived from the gasification of coal complicates removal of additional impurities such as H₂S and/or CO₂ and poses problems insofar as product quality and pollution control requirements are concerned. Although HCN, NH₃ and COS are present, as indicated, in quite minor quantities, for example, normally less than 1 per cent by volume, combined, of the total raw synthesis gas stream, they must be dealt with before the synthesis gas is utilized.

A variety of procedures has been developed for removal of these impurities. We would in particular refer to EP-A-324526 and US-A-4769224. In one method, for example, the HCN is removed by passing the synthesis gas containing the HCN over a composite catalyst comprising molybdenum on alumina. Similarly, in an integrated scheme common to gasification processes, H₂S may be removed from the synthesis gas by suitable means, such as solvent extraction followed by Claus and/or gas treating processes, the H₂S being converted to sulphur in the Claus process by contact of the gas with a suitable catalytic material.

As indicated, spent catalyst cannot be easily disposed of because of environmental regulations. Accordingly, a need exists for disposal of spent catalytic materials, particularly those derived in the procedures associated with the gasification of coal. The invention addresses this problem.

Many coals contain, in addition to carbon and hydrogen, varying quantities of inorganic incombustible material. This material becomes a by-product of the process of oxidation, and, depending on characteristics such as density and size of the particular particle, and the reactor configuration and conditions, may undergo a rough separation in the reactor into particles called "flyash" (lighter) and "slag" (denser). Depending on the process or reactor configuration, the flyash particles may be removed overhead, while the denser materials collect as a molten slag, often including separated iron, in the hearth of the reactor. The slag may be discharged downward through an outlet or orifice in the reactor, referred to as a slag tap, into a water bath.

This slag, because it is derived from a "reducing" atmosphere, tends to be different in composition and properties from slag normally associated with combustion boilers where a fully oxidizing atmosphere is utilized. For example, the slag from processes for partial combustion of coal may contain elemental iron, sulphides, and deposited carbon, components not normally associated with boiler slag. In general, the slag removed from the bottom of the water bath in partial combustion processes will normally undergo further processing before use or disposal. A variety of disposal techniques and uses has been developed for this material. Briefly, the invention seeks to utilize slag as an environmentally benign method of disposal of the catalytic wastes mentioned.

The invention therefore provides a process for the gasification of coal comprising partially combusting particulate coal in a gasification reactor comprising a gasification zone, characterized by the step of feeding solid particulate spent catalyst to said gasification zone, and producing a hot gaseous stream containing synthesis gas, and slag, and recovering the synthesis gas and slag from the gasification zone.

The invention thus comprises partially combusting coal in the presence of spent particulate catalyst. By so doing, at least the bulk of the catalyst will become part of the slag formed, and, in such form, may be disposed of in a suitable manner, e.g. as landfill or as a building material.

Advantageously, the invention comprises a process, of the type described, in which solid spent catalyst is fed to the gasification zone at a rate which is insufficient to inhibit substantially the flow of slag from the gasification zone. For most coals, this means that the spent catalyst will be fed at a rate such that the dynamic viscosity of the slag produced will not be greater than about 25 Pa.s. The temperature-composition relationships to achieve or maintain such rates are well known, as described in "The Chemistry of Coal Utilization", NAS-NRC, John Wiley and Sons, 1981, pages 1420 through 1425.

More advantageously, the invention relates to a process for the gasification of coal of the type described comprising the steps of:
(a) partially combusting particulate coal in a gasification zone comprising at least one gasification reactor, and producing a hot gaseous stream containing synthesis gas, flyslag, and a minor amount of HCN, and slag;
(b) quenching and cooling said hot gaseous stream, and removing at least the bulk of the flyslag therefrom, producing a cooled gaseous stream having reduced flyslag content;
(c) passing cooled gas stream having reduced flyslag content from step (b) to a scrubbing zone, and scrubbing said gaseous stream with an effective amount of an aqueous scrubbing solution, producing a scrubbed synthesis gas containing a minor amount of HCN;
(d) removing HCN from said gas stream by passing said gas stream in contact with a solid HCN conversion catalyst material in a conversion zone under conditions to convert HCN, producing a partially purified gas stream substantially free of HCN, and spent catalyst;
(e) removing spent HCN conversion catalyst from said conversion zone, and feeding spent HCN conversion catalyst to the gasification zone at a rate which is insufficient to inhibit substantially the flow of slag from the gasification zone.

In similar fashion, spent catalysts employed in other segments of an integrated process for the gasification of coal, or from other sources, may be fed to the gasification zone, so long as the requisite fluidity of the slag formed in the gasification reaction is maintained. Thus, as mentioned, spent gas treating and Claus catalysts may be used. Catalysts which lend themselves most suitably are those comprising alumina, although silica- or silicoalumina-containing materials (and mixtures thereof) are acceptable as long as close attention is paid to maintaining the viscosity of the slag product. Advantageously, the amount of spent catalyst will range up to about 1.0 per cent by weight of the mixture fed, in particular from 0.01 per cent to 1.0 per cent by weight, based on the total weight of the coal and the spent catalyst.

The invention will now be described in more detail by way of example.

The partial combustion of coal to produce synthesis gas, which is essentially carbon monoxide and hydrogen, and particulate flyslag, is well known, and a survey of known processes is given in "Ullmann's Enzyklopädie Der Technischen Chemie", vol. 10 (1958), pp. 360-458. Several such processes for the preparation synthesis gas are currently being developed. Accordingly, details of the gasification process are related only insofar as is necessary for understanding of the present invention.

In general, the gasification is carried out by partially combusting the coal with a limited volume of oxygen at a temperature normally between 800 °C and 2000 °C, and advantageously at a temperature between 1050 °C and 2000 °C. If a temperature of between 1050 °C and 2000 °C is employed, the product gas may contain very small amounts of gaseous side products such as tars, phenols and condensable hydrocarbons. Suitable coals include lignite, bituminous coal, sub-bituminous coal anthracite coal, and brown coal. Lignites and bituminous coals are preferred. In order to achieve a more rapid and complete gasification, initial pulverization of the coal is preferred. Particle size is preferably selected so that 70% of the solid coal feed can pass a 200 mesh sieve. The gasification is advantageously carried out in the presence of oxygen and steam, the purity of the oxygen preferably being at least 90% by volume, with nitrogen, carbon dioxide and argon being permissible as impurities. If the water content of the coal is too high, the coal should be dried before use. The atmosphere will be maintained reducing by the regulation of the weight ratio of the oxygen to moisture and ash free coal in the range of 0.6 to 1.0, preferably 0.8 to 0.9. The specific details of the equipment and procedures employed form no part of the invention, but those described in US-A-4,350,103 and US-A-4,458,607, may be employed. Although, in general, it is preferred that the ratio between oxygen and steam be selected so that from 0.1 to 1.0 parts by volume of steam is present per part by volume of oxygen, the invention is applicable to processes having substantially different ratios of oxygen to steam. The oxygen used is advantageously heated before being contacted with the coal, in particular to a temperature of from about 200 °C to about 500 °C.

The details of the gasification reactor system form no part of the present invention, and suitable reactors are described in GB-A-1501284 and US-A-4,022,591. The high temperature at which the gasification is carried out is obtained by reacting the coal with oxygen and steam in a reactor at high velocity. An advantageous linear velocity is from 1 to 10 metres per second, although higher or lower velocities may be employed. The pressure at which the gasification can be effected may vary between wide limits, in particular being from 1 to 200 bar. Residence times may vary widely; common residence times of from 0.2 to 20 seconds are described, with residence times of from 0.5 to 15 seconds being preferred.

After the starting materials have been converted, the reaction product, which comprises hydrogen, carbon monoxide, carbon dioxide, and water, as well as the aforementioned impurities, is removed from the reactor. This gas, which normally has a temperature between 1050 °C and 1800 °C, contains the gaseous impurities mentioned and flyash, including carbon-containing solids. In order to permit removal of these materials and impurities from the gas, the reaction product stream should first be quenched and cooled. A variety of elaborate techniques have been developed for cooling the gaseous stream, the techniques in general being characterized by use of a quench gas and a boiler in which steam is generated with the aid of the waste heat. Cyclones or other suitable techniques may be provided for removing particulate solids from the gaseous stream. Even though such procedures may be practised, further reduction of the solids content may nevertheless be desirable. To this end, the gas stream is advantageously passed through a scrubbing zone, where it is washed with an aqueous scrubbing solution. The scrubbing zone may comprise one or more scrubbing sections or "scrubbers". The term "aqueous scrubbing solution", as used herein, includes, but is not limited to, water, various process streams, and solution from which the HCN, NH₃ and COS have been stripped, i.e. recycle, as well as solution treated by hydrolysis, as further hereinafter described.

The spent catalyst may be fed into the gasification zone in any suitable fashion. However, it is preferred that the catalyst be fed in such fashion that the catalyst fuses and becomes mixed with the mineral components of the coal which form the slag. In the case of a process utilizing "burners", it is preferred that the coal be fed to and through the burners. Accordingly, it is much preferred that the spent catalysts be of a particle size comparable to that of the particulate coal, and, to this end, if necessary, the catalyst is suitably ground to the required size.

While the invention has been illustrated with particular apparatus, those skilled in the art will appreciate that, except where specified, other equivalent or analogous units may be employed. The term "zone", as employed in the specification and claims, includes, where suitable, the use of segmented equipment operated in series, or the division of one unit into multiple units to improve efficiency or overcome size constraints, etc. Parallel operation of units, is, of course, well within the scope of the invention.

## Claims

1. A process for the treatment of degraded catalyst (i.e. which no longer performs as desired), from various segments of an integrated process for the gasification of coal, said integrated process comprising the steps of:
(a) partially combusting particulate coal in a gasification reactor, and producing slag and a hot gaseous stream containing synthesis gas, flyslag, and a minor amount of impurities;
(b) quenching and hot cooling said gaseous stream, and removing at least the bulk of the flyslag therefrom, producing a cooled gaseous stream having reduced flyslag content;
(c) subjecting said gaseous stream, after having left the gasification reactor, to at least one separate (i.e. outside the gasification reactor) catalytic purification procedure to remove the said impurities from the synthesis gas by means of reaction of said impurities with a chemically reactive compound in a conversion zone and passing the said synthesis gas containing the said impurities in contact with a suitable solid particulate catalyst material which increases the rate of said reaction, producing a purified synthesis gas stream, and eventually solid degraded catalyst;
characterized by the step of:
(d) removing solid degraded particulate catalyst from said conversion zone(s) of said separate catalytic purification procedure(s) and feeding said solid degraded catalyst with the coal to the gasification reactor and partially combusting coal in the presence of said solid degraded particulate catalyst.

2. The process as claimed in claim 1, characterized in that the solid degraded catalyst, which is fed with the coal to the gasification reactor, comprises from 0.01 percent to 1.0 percent by weight, based upon the total weight of the coal and the degraded catalyst.

3. The process as claimed in claim 1 or 2, characterized in that the degraded catalyst comprises alumina, silica, silicoalumina-containing materials, or mixtures thereof.

4. The process as claimed in any one of claims 1-3, characterized in that the degraded catalyst is fed to the gasification reactor at a rate such that the dynamic viscosity of the slag produced is not greater than 25 Pa.s.

## Patentansprüche

1. Ein verfahren zur Behandlung von abgebauten Katalysatoren (d.h., welche nicht mehr in der gewünschten Weise ihre Leistung erbringen) aus den verschiedensten Abschnitten eines integrierten Verfahren zur Vergasung von Kohle, wobei das besagte integrierte verfahren die folgenden Maßnahmen umfaßt:
(a) Teilverbrennung von teilchenförmiger Kohle in einem Vergasungsreaktor unter Erzeugung von Schlacke und einem heißen Gasstrom, der Synthesegas, Flugasche und einen kleinen Anteil Verunreinigungen enthält;
(b) Abschrecken und Abkühlen des besagten heißen Gasstroms und Entfernen von mindestens dem größten Teil an Flugasche daraus unter Bildung eines gekühlten Gasstroms mit verringertem Flugaschegehalt;
(c) Durchführen von katalytischen Reinigungsmaßnahmen bei besagtem Gasstrom, nachdem dieser den Vergasungsreaktor verlassen hat, (d.h. außerhalb des Vergasungsreaktors) zwecks Entfernung von besagten Verunreinigungen aus dem Synthesegasstrom mittels einer chemischen reaktiven Verbindung in einer Umwandlungszone und durch Leiten besagten Synthesegasstroms, welcher die Verunreinigungen enthält, im Kontakt mit einem geeigneten festen teilchenförmigen Katalysatormaterial, welches die Geschwindigkeit besagter Reaktion erhöht, unter Bildung eines gereinigten Synthesegasstroms und eines gegebenenfalls abgebauten festen Katalysators;
gekennzeichnet durch die weitere Maßnahme
(d) des Entfernens des abgebauten festen teilchenförmigen Katalysators aus besagter (besagten) Umwandlungszone(n) und Einspeisen des besagten festen abgebauten Katalysators zusammen mit der Kohle in den Vergasungsreaktor sowie das Teilverbrennen der Kohle in Anwesenheit besagten festen, abgebauten, teilchenförmigen Katalystors.

2. Das Verfahren wie in Anspruch 1 beansprucht, dadurch gekennzeichnet, daß die Menge des dem Vergasungsreaktor zusammen mit der Kohle zugespeisten festen abgebauten Katalysators 0,01 bis 1,0 Gew% beträgt, bezogen auf das Gesamtgewicht aus der Kohle und dem abgebauten Katalysator.

3. Das Verfahren wie in Anspruch 1 oder 2 beansprucht, dadurch gekennzeichnet, daß der abgebaute Katalysator Aluminiumoxid, Siliciumdioxid, Silicoaluminiumoxid oder Mischungen daraus enthaltende Materialien umfaßt.

4. Das Verfahren wie in irgendeinem der Ansprüche 1 bis 3 beansprucht, dadurch gekennzeichnet, daß der abgebaute Katalysator dem Vergasungsreaktor mit einer solchen Geschwindigkeit zugeführt wird, daß die dynamische Viskosität der erzeugten Schlacke keinen Wert von über 25 Pa.s annimmt.

## Revendications

1. Procédé de traitement de catalyseur dégradé (c'est à dire ne fonctionnant plus comme on le voudrait) à partir de divers segments d'un procédé unitaire de gazéification de charbon, ledit procédé unitaire consistant :
a) à brûler partiellement le charbon particulaire dans un réacteur de gazéification et à produire du laitier et un courant gazeux chaud contenant du gaz de synthèse, des scories volantes et une petite quantité d'impuretés ;
b) à tremper et à refroidir à chaud le courant gazeux et enlever au moins la majeure partie des scories volantes de celui-ci, en produisant un courant gazeux refroidi ayant une teneur réduite en scories volantes ;
c) à soumettre le dit courant gazeux, a la sortie du réacteur de gazéification, à au moins un processus de purification catalytique (c'est à dire en dehors du réacteur de gazéification) pour éliminer lesdites impuretés du gaz de synthèse par réaction desdites impuretés avec un composé chimiquement réactif dans une zone de conversion et à faire passer le dit gaz de synthèse contenant lesdites impuretés en contact avec un catalyseur particulaire solide approprié qui accélère ladite réaction, en produisant un courant gazeux de synthèse purifié, et finalement, le catalyseur solide dégradé,
caractérisé en ce que
d) on soutire ledit catalyseur particulaire dégradé de la (ou des) zone de conversion dudit processus séparé de purification catalytique et on transfère le catalyseur solide dégradé avec le charbon au réacteur de gazéification et on brûle partiellement le charbon en présence dudit catalyseur particulaire solide dégradé.

2. Procédé selon la revendication 1, caractérisé en ce que le catalyseur solide dégradé qu'on admet avec le charbon dans le réacteur de gazéification, constitue de 0,01 à 1,0% en poids, par rapport au poids total du charbon et du catalyseur dégradé.

3. Procédé selon la revendication 1 ou 2, caractérisé en ce que le catalyseur dégradé comprend de l'alumine, de la silice, de la silice-alumine ou leurs mélanges.

4. Procédé selon l'une quelconque des revendications 1 à 3, caractérisé en ce qu'on admet le catalyseur dégradé dans le réacteur de gazéification à un débit tel que la viscosité dynamique du laitier produit ne dépasse pas 25 Pa.s.
